# EUROPÄISCHE PATENTANMELDUNG

(11) **EP 1 077 552 A2**
(43) Veröffentlichungstag der Anmeldung: **21.02.2001**
(21) Anmeldenummer: 00116903.6
(22) Anmeldetag: 04.08.2000
(51) Int. Cl.: H04J 14/02, H04B 10/213

(54) **Anordnung zum Abzweigen von optischen Signalen**

(30) Priorität: 17.08.1999 DE 19938996
(71) Anmelder: SIEMENS AKTIENGESELLSCHAFT, 80333 München (DE)
(72) Erfinder: Leisching, Patrick, Dr., 81247 München (DE); Stoll, Detlef, Dr., 30419 Hannover (DE); Bock, Harald, Dr., 81479 München (DE); Richter, Alexander, Dr., 81475 München (DE); Welsch, Tim, 30419 Hannover (DE); Jobmann, Klaus, Prof.Dr., 30519 Hannover (DE)

(57) **Zusammenfassung**

Das Drop-Modul (DM) besteht im wesentlichen aus einem Zirkulator (2) und mehreren festen und/oder abstimmbaren Bragg-Filtern (6 bis 9). Jedes dieser Filter dient zum Auskoppeln eines Drop-Kanals (DK1 bis DK4). Die ausgekoppelten Kanäle werden durch einen mehrere Kanalfilter aufweisenden WDM-Demultiplexer (10) nochmals gefiltert.

## Beschreibung

Die Erfindung betrifft eine Anordnung zum Abzweigen von optischen Signalen nach dem Oberbegriff des Patentanspruchs 1.

Anordnungen zum Abzweigen von optischen Signalen, sog. Drop-Module, müssen hohe Anforderungen an das Nebensprechen erfüllen. Dies gilt insbesondere dann, wenn statt eines zur Zeit üblichen 200 GHz Kanalrasters geringere Kanalabstände verwendet werden sollen. Einen Teil dieses Problems kann man umgehen, indem die abzuzweigenden Kanäle mit anderen Kanälen verschachtelt übertragen werden.

Problematisch sind z.Zt. noch ausreichend schmale und trennscharfe optische Filter zur Selektion einzelner Kanäle. Um die Anforderungen für die Filter zu reduzieren, können die in einem Modul abzuzweigenden Kanäle als Gruppe übertragen werden, wobei der Abstand bis zur nächsten Kanalgruppe etwa das Doppelte des Kanalabstandes beträgt. So ist es möglich, zunächst eine Selektion mit einem einfachen Gruppenfilter durchzuführen, um anschließend mit einem weiteren Filter, das größere Bandbreiten aufweist, die einzelnen Kanäle zu selektieren. Der beispielsweise aus "Electronics Letters", 1^{st} April 1999, Vol. 35, No. 7, page 591 bis 592 bekannte Add-Drop-Multiplexer reicht bei der Trennschärfe und Sperrdämpfung der z.Zt. erhältlichen Kanalfiltern nicht aus, um eine ausreichende Kanaltrennung zu gewährleisten.

Durch ein einfaches aus einem Wellenlängenmultiplexer (Filteranordnung) und einem Koppler bestehendes Add-Modul kann jedes Drop-Modul zu einem Add-Drop-Modul ergänzt werden.

Für Broadcaste-Betrieb, bei dem jeweils ein Teil der Leistung ausgekoppelt wird, treten dieselben Probleme auf.

Aufgabe der Erfindung ist es, kostengünstige Drop-Module bzw. Add-Drop-Module anzugeben, die sich konstengünstig realisieren lassen.

Diese Aufgabe wird durch die in den unabhängigen Ansprüchen beschriebenen Drop-Module, die auch Teil eines Add-Drop-Moduls sein können, gelöst.

Der besondere Vorteil der erfindungsgemäßen Filteranordnung liegt in deren Kostenvorteil. Werden die einzelnen in einem Drop-Modul abzuzweigenden Kanäle mit anderen Kanälen verschachtelt übertragen, so kann jeder der gewünschten Kanäle zunächst durch feste oder abstimmbare Grating-Filter selektiert werden, um dann durch breitere - beispielsweise dielektrische - Filter nochmals selektiert werden. Die weiteren Filter sind erforderlich, da die Bragg-Grating-Filter zwar als sehr schmale Filter realisierbar sind, diese jedoch keine ausreichende Sperrdämpfung aufweisen. Durch die Verschachtelung von Kanälen und den dadurch erzielten größeren Kanalabstand zwischen diesen Filtern können die Anforderungen an die nachgeschalteten Filter reduziert werden.

Für den Broadcaste-Betrieb wird in die Übertragungsfaser ein Splitter eingefügt, der einen Teil des übertragenen Signals abzweigt, und - in der Regel verstärkt - einem erfindungsgemäßen Drop-Modul zuführt.

Weitere vorteilhafte Ausbildungen der Erfindung sind in den Unteransprüchen angegeben.

Die Erfindung wird anhand von Figuren näher erläutert.

Es zeigen:
- Figur 1: den Aufbau eines erfindungsgemäßen Drop-Moduls und einen zugehörigen Add-Modul,
- Figur 2: die Selektion durch Gratingfilter bei verschachtelten WDM-Kanälen,
- Figur 3: die Selektion durch einen nachgeschalteten Wellenlängendemultiplexer,
- Figur 4: ein Drop-Modul für Broadcaste-Signale und
- Figur 5: ein Broadcaste-Modul zur Auskopplung eines WDM-Kanals.

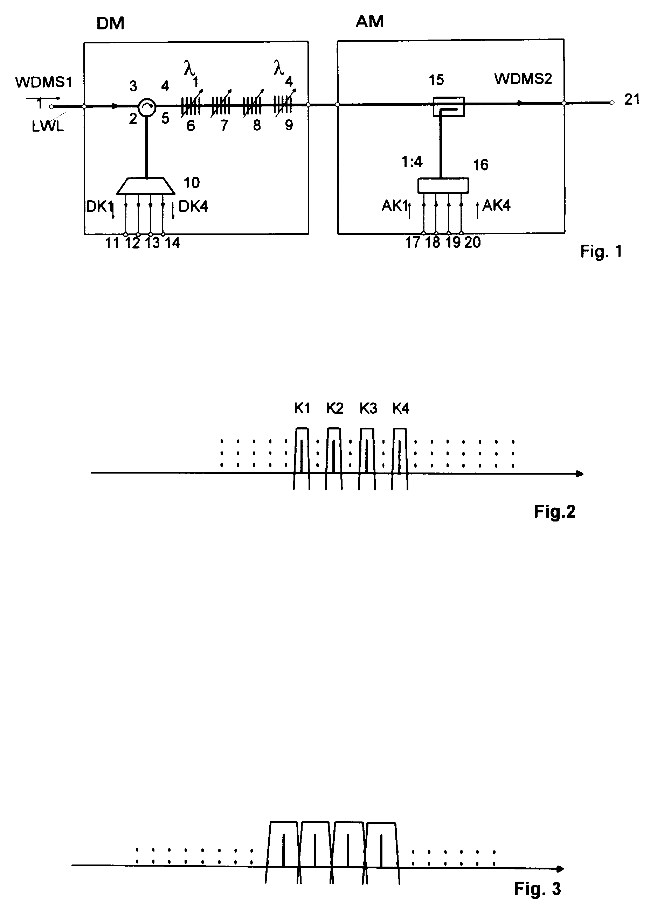

In **Figur 1** ist die Reihenschaltung eines Drop-Moduls DM mit einem bekannten Add-Modul AM als Prinzipschaltbild dargestellt. Beide Module bilden ein Add-Drop-Modul. Dem Eingang 1 des Drop-Moduls DM wird ein WDM-Signal WDMS1 zugeführt, bei dem zwei oder mehr Gruppen von Kanälen von WDM-Gruppensignalen miteinander verschachtelt sind. Das Drop-Modul dient dazu, die in **Figur 2** als durchgehende Striche dargestellten Kanäle - oder einen Teil dieser Kanäle - einer Gruppe auszukoppeln (drop; auszufiltern/abzuzweigen). Hierzu können auf bestimmte Frequenzen abgestimmte oder abstimmbare Bragg-Filter 6 bis 9 verwendet werden. Vorzugsweise sollten diese Filter wegen der einfachen Herstellbarkeit als Faser-Bragg-Gitter realisiert werden.

Das erste WDM-Signal WDMS1 wird einem ersten Anschluß 3 eines Zirkulators 2 zugeführt und an dessen zweiten Anschluß 4 abgegeben, an dem die Reihenschaltung der Bragg-Filter 6 bis 9 angeschaltet ist. Stimmt die Wellenlänge eines WDM-Kanals mit der Sperrfrequenz des Bragg-Filters überein, so wird dieser Kanal reflektiert und über den dritten Anschluß des Zirkulators ausgegeben, um von einem WDM-Demultiplexer 10 (einer Filteranordnung), der als weiteres Kanalfilter wirkt, nochmals mit höherer Sperrdämpfung gefiltert und dann an einem der Ausgänge 11 bis 14 abgegeben zu werden. In **Figur 3** sind die gegenüber den WDM-Kanalfiltern ca. doppelt so großen Durchlaßbereiche eines für vier Kanäle mit beispielsweise 200 GHz Kanalabstand ausgelegten WDM-Demultiplexers dargestellt.

Um eine höhere Flexibilität des Drop-Modules zu erreichen, sind die WDM-Kanalfilter abstimmbar und können so verstimmt werden, daß ihre Sperrfrequenzen zwischen den WDM-Kanälen liegen (Parken) und somit keine Drop-Funktion mehr aufweisen. Eine andere Möglichkeit besteht darin, die Filterwirkung beispielsweise durch Erhitzen aufzuheben. Durch die Reihenschaltung von Filtern ist es möglich, beispielsweise bis zu 4 Drop-Kanäle DK1 bis DK4 auszukoppeln (drop). Durch einen erweiterten WDM-Demultiplexer, der mehr Ausgänge aufweist, als mögliche auszukoppelnde Kanäle vorgesehen sind, können auch beispielsweise 4 beliebige von 8 verschachtelten Kanälen einer Kanalgruppe ausgekoppelt werden. Statt eines erweiterten WDM-Demultiplexers kann auch ein Wellenlängen-Umsetzer zwischen dem Zirkulator und dem WDM-Demultiplexer eingefügt werden, der dann die Wellenlänge der ausgewählten Kanäle an die Filter anpaßt.

Der Add-Modul besteht im wesentlichen aus einem optischen Koppler und einem WDM-Multiplexer 16. Im Ausführungsbeispiel können 4 Add-Kanäle AK1 bis AK4 über die Eingänge 17 bis 20 eingespeist werden.

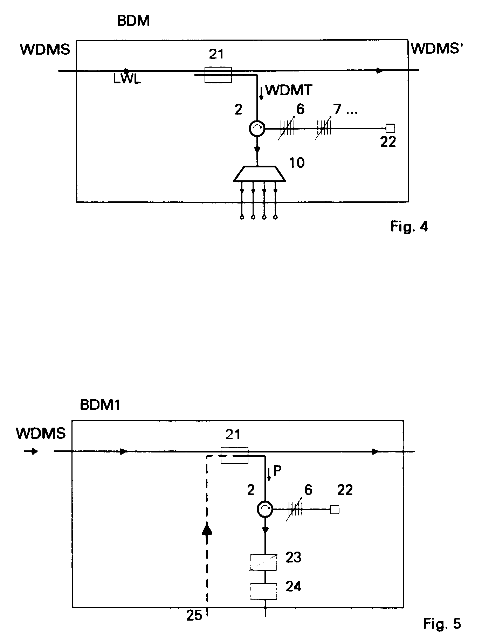

**Figur 4** zeigt ein für Broadcast-Betrieb ausgelegtes Drop-Modul BDM, das weitgehend Figur 1 entspricht. Dieses enthält jedoch einen Splitter 21, der in die Übertragungsfaser LWL eingeschaltet ist. Ein Teil des am Eingang des Moduls anliegenden WDM-Signals WDMS wird über den Splitter ausgekoppelt und einer dem Drop-Modul DM entsprechenden Anordnung zugeführt. Ober feste und/oder abstimmbare Filter 6, 7,... lassen sich wieder einzelne Kanäle auskoppeln und nochmals gefiltert ausgegeben werden. Die von den Filtern nicht reflektierte Energie wird in einem optischen Sumpf, beispielsweise einem schräg abgeschnittenen Faserende, vernichtet.

**Figur 5** zeigt ein entsprechendes Add-Drop-Modul BDM1 zum auskoppeln eines einzigen Kanals, der im allgemeinen ebenfalls nochmals in einem Wellenlängen-Demultiplexer gefiltert wird.

Eine Alternative hierzu bildet wieder ein Wellenlängenumsetzer 23 und ein Kanalfilter 24. Über einen Add-Eingang 25 ist es möglich, einen bisher unbelegten WDM-Kanal einzukoppeln.

## Patentansprüche

1. Anordnung zum Auskoppeln von verschachtelten und nicht benachbarten Wellenlängenmultiplex(WDM)-Kanälen (DK1 bis DK4) eines WDM-Signals (WDMS1), die in den Signalweg eingeschaltet ist, mit einem Zirkulator (2), dessen erstem Anschluß das WDM-Signal (WDMS1) zugeführt wird, mit an einen zweiten Anschluß des Zirkulator (2) in Reihe angeschalteten Bragg-Kanalfiltern (6 bis 9) zum Auskoppeln der WDM-Kanäle (DK1 bis DK4) über einen dritten Anschluß des Zirkulators (2),
**dadurch gekennzeichnet,**
daß die Bragg-Kanalfilter (6 bis 9) als schmalbandige Kanalfilter ausgeführt sind, die auf nicht benachbarte also zueinander mindestens den doppelten Kanalabstand aufweisende Wellenlängenmultiplex-Kanäle abgestimmt werden,
daß eine als WDM-Demultiplexer (10) wirkende Filterordnung vorgesehen ist, der die über den Zirkulator (2) ausgekoppelten WDM-Kanäle (DK1 bis DK4) zugeführt werden, und
daß die Filteranordnung Trennfilter aufweist, die den möglichen auszukoppelnden WDM-Kanälen (DK1 bis DK4) entsprechende Durchlaßbereiche und jeweils eine größere Sperrdämpfung als ein Bragg-Kanalfilter (6 bis 9) aufweisen.

2. Anordnung zum Abzweigen eines Teilsignals (WDMT) eines Wellenlängenmultiplex (WDM)-Signals (WDMS1) mit einem Zirkulator (2), dessen erstem Anschluß das WDM-Signal (WDMS1) zugeführt wird, mit an einen zweiten Anschluß des Zirkulator (2) in Reihe angeschalteten Bragg-Kanalfiltern (6 bis 9) zum Auskoppeln der WDM-Kanäle mit einem Zirkulator (2), dessen erstem Anschluß das WDM-Signal (WDMS1) zugeführt wird, mit an einen zweiten Anschluß des Zirkulator (2)angeschalteten Bragg-Kanalfiltern (6 bis 9) zum Auskoppeln der WDM-Kanäle (DK1 bis DK4) über einen dritten Anschluß des Zirkulators (2),
**dadurch gekennzeichnet,**
daß in den Signalweg ein Splitter (21) zum Auskoppeln eines Teilsignals (WDMT) eingeschaltet ist,
daß die Bragg-Kanalfilter (6 bis 9) als schmalbandige Kanalfilter ausgeführt sind, die auf nicht benachbarte mindestens den doppelten Kanalabstand aufweisende WDM-Kanäle abgestimmt werden,
daß eine als WDM-Demultiplexer (10) wirkende Filterordnung vorgesehen ist, der die über den Zirkulator (2) ausgekoppelten WDM-Kanäle (DK1 bis DK4) zugeführt werden, und
daß die Filteranordnung Trennfilter aufweist, die den möglichen auszukoppelnden WDM-Kanälen (DK1 bis DK4) entsprechende Durchlaßbereiche und jeweils eine größere Sperrdämpfung als ein Bragg-Kanalfilter (6 bis 9) aufweisen.

3. Anordnung nach Anspruch 2,
**dadurch gekennzeichnet,**
daß ein einziges abstimmbares Kanalfilter (6) vorgesehen ist.

4. Anordnung nach Anspruch 1 oder 2,
**dadurch gekennzeichnet,**
daß abstimmbare Kanalfilter (6 bis 9) verwendet werden, deren Sperrbereich so klein ist, daß ein auf eine zwischen den WDM-Kanälen liegende Wellenlänge abgestimmtes Kanalfilter die Funktion der benachbarten WDM-Kanäle zumindest nicht wesentlichen beeinflußt.

5. Anordnung nach einem der vorhergehenden Ansprüche,
**dadurch gekennzeichnet,**
daß die Sperrdämpfung der Filter des WDM-Multiplexers größer als 30 dB ist .

6. Anordnung nach Anspruch 2,
**dadurch gekennzeichnet,**
daß die Reihenschaltung der Kanalfilter durch einen optischen Sumpf (22) abgeschlossen ist, in denen nicht reflektiertes WDM-Signal geleitet wird.

7. Anordnung nach einem der vorhergehenden Ansprüche,
**dadurch gekennzeichnet,**
daß der WDM-Demultiplexer (10) für eine größere Anzahl von WDM-Kanälen konzipiert ist als dies der Anzahl der abstimmbaren WDM-Kanalfilter (6 bis 9) entspricht.

8. Anordnung nach einem der vorherigen Ansprüche,
**dadurch gekennzeichnet,**
daß der Durchlaßbereich eines der Trennfilters mindestens dem 1,8fachem Durchlaßbereich eines WDM-Kanalfilter (6 bis 9) entspricht.

9. Anordnung nach einem der vorherigen Ansprüche,
**dadurch gekennzeichnet,**
daß zwischen Zirkulator (2) und dem WDM-Demultiplexer (10) ein Wellenlängen-Umsetzer (23) eingeschaltet ist.
